(19) **Europäisches Patentamt / European Patent Office / Office européen des brevets**

(11) **EP 1 902 275 B1**

(12) **EUROPÄISCHE PATENTSCHRIFT**

(45) Veröffentlichungstag und Bekanntmachung des Hinweises auf die Patenterteilung:
**31.12.2008 Patentblatt 2009/01**

(21) Anmeldenummer: **06762354.6**

(22) Anmeldetag: **03.07.2006**

(51) Int Cl.:
**G01B 21/04** *(2006.01)*      **G05B 19/401** *(2006.01)*

(86) Internationale Anmeldenummer:
**PCT/EP2006/006456**

(87) Internationale Veröffentlichungsnummer:
**WO 2007/006448 (18.01.2007 Gazette 2007/03)**

(54) **VERFAHREN ZUM ANTASTEN EINES WERKSTÜCKS MIT EINEM KOORDINATENMESSGERÄT**

METHOD FOR PROBING A WORK PIECE WITH A COORDINATE MEASURING DEVICE

PROCEDE DE PALPAGE D'UNE PIECE A L'AIDE D'UN APPAREIL DE MESURE DE COORDONNEES

(84) Benannte Vertragsstaaten:
**DE FR GB IT**

(30) Priorität: **13.07.2005 DE 102005032749**

(43) Veröffentlichungstag der Anmeldung:
**26.03.2008 Patentblatt 2008/13**

(73) Patentinhaber: **Carl Zeiss Industrielle Messtechnik GmbH**
**73447 Oberkochen (DE)**

(72) Erfinder:
• **FUCHS, Andreas**
**73434 Aalen (DE)**

• **DEEG, Hermann**
**73434 Aalen (DE)**
• **PETER, Heinz**
**89079 Ulm (DE)**

(74) Vertreter: **Schorr, Frank Jürgen**
**Diehl & Partner,**
**Augustenstrasse 46**
**80333 München (DE)**

(56) Entgegenhaltungen:
EP-A- 0 240 151      US-A- 4 222 238
US-A- 4 457 074      US-A- 5 189 806
US-A- 5 726 917      US-A1- 2002 029 119

EP 1 902 275 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Antasten einer Oberfläche eines Werkstücks mit einem Koordinatenmeßgerät und ein Koordinatenmeßgerät, welches zur Ausführung des Verfahrens ausgebildet ist.

Ein Koordinatenmeßgerät wird eingesetzt, um Koordinaten von Oberflächenpunkten eines Werkstücks zu messen. Ein herkömmliches Koordinatenmeßgerät umfaßt eine Werkstückhalterung zur Lagerung des zu vermessenden Werkstücks und einen Meßkopf zum Antasten der Oberfläche des Werkstücks. Hierzu umfaßt das Koordinatenmeßgerät mehrere zueinander verlagerbare Komponenten, von denen eine mit der Werkstückhalterung fest verbunden ist und eine andere den Meßkopf trägt, wobei ein oder mehrere Antriebe für die Komponenten vorgesehen sind, um den Meßkopf relativ zu der Werkstückhalterung zu verlagern. Der Meßkopf trägt einen Taster mit einem an einem Tasterschaft gehalterten Tasterelement, welches zum Antasten der Werkstückoberfläche mit dieser in Kontakt gebracht wird. Bei hergestelltem Kontakt zwischen dem Tasterelement und der Oberfläche werden die Koordinaten des entsprechenden Kontaktpunktes von dem Koordinatenmeßgerät gemessen. Mit Scanning wird ein spezieller Antastmodus bezeichnet, bei welchem Meßpunkte fortlaufend aufgenommen werden, um Linien auf der zu vermessenden Oberfläche zu charakterisieren. Hierbei wird das Tasterelement entlang einer Scanning-Bahn unter Beibehaltung des Kontakts zwischen dem Tasterelement und der Oberfläche mit einer Scanning-Geschwindigkeit geführt, wobei an einer Vielzahl von Kontaktpunkten entlang der Scanning-Bahn Koordinatenwerte der Kontaktpunkte gemessen werden. US 5189806 offenbart ein herkömmliches Scanning-Verfahren.

Wird das Tasterelement mit der Oberfläche in Kontakt gebracht und sodann das Tasterelement relativ zu der Oberfläche auf die Scanning-Geschwindigkeit beschleunigt, so treten in dem Gesamtsystem Schwingungen auf, welche zu Verfälschungen der gemessenen Werte führen. Entsprechend treten auch Schwingungen auf, wenn die Geschwindigkeit des Tasterelements relativ zu der Oberfläche zum Endpunkt der Scanning-Bahn hin reduziert wird. Auch hier treten aufgrund der Änderung der kinematischen Verhältnisse insbesondere durch Schwingungen Verfälschungen der gemessenen Werte auf.

Besteht eine herkömmliche Meßaufgabe beispielsweise darin, eine Zylindermantelfläche entlang einer geschlossenen Kreislinie zu vermessen, so wird die entsprechende Scanning-Bahn derart gewählt, daß die Kreislinie innerhalb eines Überlapps von 90 Grad doppelt vermessen wird. Es werden dann durch Einschwingphänomene gestörte Meßpunkte zu Beginn der Scanning-Bahn und am Ende der Scanning-Bahn verworfen, das heißt in der weiteren Auswertung nicht berücksichtigt, wobei allerdings der Überlapp von 90 Grad meistens ausreichend groß bemessen ist, so daß ein zentraler Bereich der Scanning-Bahn, welcher durch die Einschwingvorgänge nicht gestört ist, einen vollen Kreisumfang umfaßt.

Es ist eine Aufgabe der vorliegenden Erfindung, ein Verfahren zum Antasten einer Oberfläche eines zu vermessenden Werkstücks mit einem Koordinatenmeßgerät durch Scanning vorzuschlagen, bei welchem am Beginn und am Ende einer Scanning-Bahn auftretenden Einschwingvorgängen hinreichend Rechnung getragen wird.

Ferner ist es eine Aufgabe der vorliegenden Erfindung, ein entsprechendes Koordinatenmeßgerät vorzuschlagen.

Erfindungsgemäß wird ein Verfahren zum Antasten einer Oberfläche eines zu vermessenden Werkstücks mit einem Koordinatenmeßgerät vorgeschlagen, wobei die Oberfläche mit einem Tasterelement entlang einer zwischen einem Scanning-Startpunkt und einem Scanning-Endpunkt sich erstreckenden Scanning-Bahn mit einer Scanning-Geschwindigkeit gescannt wird. Um Einschwingphänomenen Rechnung zu tragen, wird allerdings das Tasterelement nicht an dem Scanning-Startpunkt in Kontakt mit der Oberfläche des Werkstücks gebracht und dann mit der Scanning-Bewegung begonnen, es wird vielmehr das Tasterelement mit Abstand von dem Scanning-Startpunkt an einem Vorlaufstartpunkt in Kontakt mit der Werkstückoberfläche gebracht, und das Tasterelement wird dann entlang einer zwischen dem Vorlaufstartpunkt und dem Scanning-Startpunkt sich erstreckenden Vorlaufbahn bewegt und auf die Scanning-Geschwindigkeit beschleunigt, so daß beim Durchlaufen des Scanning-Startpunkts das Tasterelement relativ zu der Oberfläche bereits die Scanning-Geschwindigkeit aufweist und Einschwingphänomene abgeklungen sind.

Hierbei ist eine Länge der Vorlaufbahn nicht fest vorgegeben, sondern wird auf konkret vorliegende Meßbedingungen angepaßt. Somit ist es möglich, die Länge der Vorlaufbahn und die zum Durchlaufen derselben notwendige Zeit zu optimieren, so daß nicht bei bestimmten Meßbedingungen ein Durchsatz aufgrund einer fest vorgegebenen zu großen Länge der Vorlaufbahn reduziert ist. Auch wird dadurch vermieden, daß die Vorlaufbahn bzw. die Nachlaufbahn bei bestimmten Meßbedingungen nicht zu klein gewählt wird.

Beispiele für Parameter, in Abhängigkeit von welchen die Länge der Vorlaufbahn bei konkreten Meßaufgaben bestimmt wird, sind der Betrag der vorbestimmten Scanning-Geschwindigkeit, eine Steifigkeit des für die Bewältigung der Meßaufgabe verwendeten Tasters und eine Masse des verwendeten Tasters.

Wird, gemäß einer beispielhaften Ausführungsform der Erfindung, ein Werkstück beispielsweise mit einer großen Scanning-Geschwindigkeit gescannt und sodann dieses Werkstück oder ein anderes Werkstück mit einer im Vergleich hierzu kleineren Scanning-Geschwindigkeit gescannt, so wird die Länge der Vorlaufbahn für das Scannen mit der größeren Scanning-Geschwindigkeit länger gewählt als die entsprechende Vorlaufbahn für das Scannen mit der kleineren Scanning-Geschwindigkeit. Dem liegt die Überlegung zugrunde, daß eine Beschleunigung des Tasterelements auf eine vergleichsweise größere Scanning-Geschwindigkeit vergleichsweise stärkere und länger dauernde Einschwingphänomene verursacht, welchen mit einer größeren Länge der Vorlaufbahn Rechnung getragen wird.

Gemäß einer weiteren beispielhaften Ausführungsform wird ein Werkstück mit einem Tasterelement mit einer vergleichsweise großen Steifigkeit gescannt und sodann das gleiche Werkstück oder ein anderes Werkstück mit einem anderen Tasterelement mit einer vergleichsweise niedrigeren Steifigkeit gescannt. Hierbei wird für das Scannen mit dem Tasterelement mit der größeren Steifigkeit eine kürzere Länge der Vorlaufbahn gewählt als für das Scannen mit dem Taster mit der niedrigeren Steifigkeit.

Gemäß einer weiteren beispielhaften Ausführungsform wird ein Werkstück zunächst mit einem Taster einer vergleichsweise größeren Masse gescannt und sodann das gleiche Werkstück oder ein hiervon verschiedenes Werkstück mit einem Taster einer vergleichsweise kleineren Masse gescannt. Hierbei wird die Länge der Vorlaufbahn für das Scannen mit dem Taster der größeren Masse länger gewählt als beim Scannen mit dem Taster mit der kleineren Masse.

Die gleichen Überlegungen zur Bestimmung der Länge der Vorlaufbahn können auch auf die Bestimmung einer Länge einer Nachlaufbahn angewendet werden, so daß der Taster nicht nur bis zum Scanning-Endpunkt entlang der Scanning-Bahn bewegt wird, sondern darüber hinaus noch entlang einer zwischen dem Scanning-Endpunkt und einem Nachlaufendpunkt sich erstreckenden Nachlaufbahn entlang der Oberfläche des Werkstücks weiterbewegt wird, so daß Ein- bzw. Ausschwingvorgänge nicht die Messung während des Scannens bis zum Scanning-Endpunkt beeinflussen können. Somit kann auch die Länge der Nachlaufbahn in Abhängigkeit von der Scanning-Geschwindigkeit, der Steifigkeit des Tasters oder der Masse des Tasters bestimmt werden. Die Bewegung des Tasters entlang der Nachlaufbahn kann in Ergänzung zur Bewegung entlang der Vorlaufbahn erfolgen. Es ist jedoch auch vorgesehen, daß die Bewegung entlang der Nachlaufbahn eingesetzt wird, ohne daß der Taster vor dem Scanning-Startpunkt eine Vorlaufbahn durchlaufen hat.

Gemäß einer beispielhaften Ausführungsform ist die Länge der Vorlaufbahn größer als die Länge der Nachlaufbahn.

Gemäß einer weiteren beispielhaften Ausführungsform ist die Scanning-Geschwindigkeit während des Scannens entlang der Scanning-Bahn im wesentlichen konstant, so daß aufgrund von Änderungen des Betrags der Scanning-Geschwindigkeit keine zusätzlichen Einschwingphänomene erzeugt werden.

Gemäß einem weiteren Aspekt der vorliegenden Erfindung ist ein Koordinatenmeßgerät vorgesehen, welches eine Werkstückhalterung, einen Meßkopf, wenigstens einen Antrieb zum Verlagern des Meßkopfes relativ zu der Werkstückhalterung und eine Steuerung aufweist, wobei die Steuerung dazu ausgebildet ist, das Koordinatenmeßgerät zur Ausführung des vorangehend beschriebenen Verfahrens anzusteuern, bei welchem vor einem Scanning der Oberfläche eines Werkstücks entlang einer Scanning-Bahn ein Bewegen des Tasterelements entlang einer Vorlaufbahn und/oder nach dem Scannen ein Bewegen des Tasterelements entlang einer Nachlaufbahn durchgeführt wird, wobei eine Länge der Vorlaufbahn bzw. eine Länge der Nachlaufbahn in Abhängigkeit von Parametern einer konkreten Meßsituation gewählt wird.

Unter einem weiteren Aspekt sieht die Erfindung einen computerlesbaren Träger vor, welcher Informationen enthält, welche ein Steuerprogramm repräsentieren, das dazu ausgebildet ist, eine Steuerung eines Koordinatenmeßgeräts zu veranlassen, das vorausgehend erläuterte Verfahren auszuführen. Der computerlesbare Träger kann jeglicher geeigneter Träger sein, wie etwa ein Festkörperspeicher, ein Magnetspeicher, ein optischer Speicher, oder er kann modulierte Wellen bzw. Signale umfassen, welche zur Übertragung durch ein Netzwerk, wie etwa das Internet, geeignet sind.

Ausführungsformen der Erfindung werden nachfolgend anhand von Zeichnungen näher erläutert. Hierbei zeigt

Figur 1      eine Ausführungsform eines erfindungsgemäßen Koordinatenmeßgeräts,

Figur 2      eine erläuternde Darstellungsform für eine Ausführungsform eines erfindungsgemäßen Verfahrens zum Antasten einer Oberfläche eines zu vermessenden Werkstücks,

Figur 3      eine Abhängigkeit eines Korrekturfaktors von einer bei dem Verfahren gemäß Figur 2 verwendeten Tastersteifigkeit,

Figur 4      eine Abhängigkeit eines Korrekturfaktors von einer bei dem Verfahren gemäß Figur 2 verwendeten Tastermasse,

Figur 5      eine erläuternde Darstellung einer Ausführungsform des Verfahrens zum Scannen entlang einer geschlossenen Scanning-Bahn auf einer Innenzylinderoberfläche, und

Figur 6    eine erläuternde Darstellung einer Ausführungsform des Verfahrens zum Scannen entlang einer geschlossenen Scanning-Bahn auf einer Außenzylinderoberfläche.

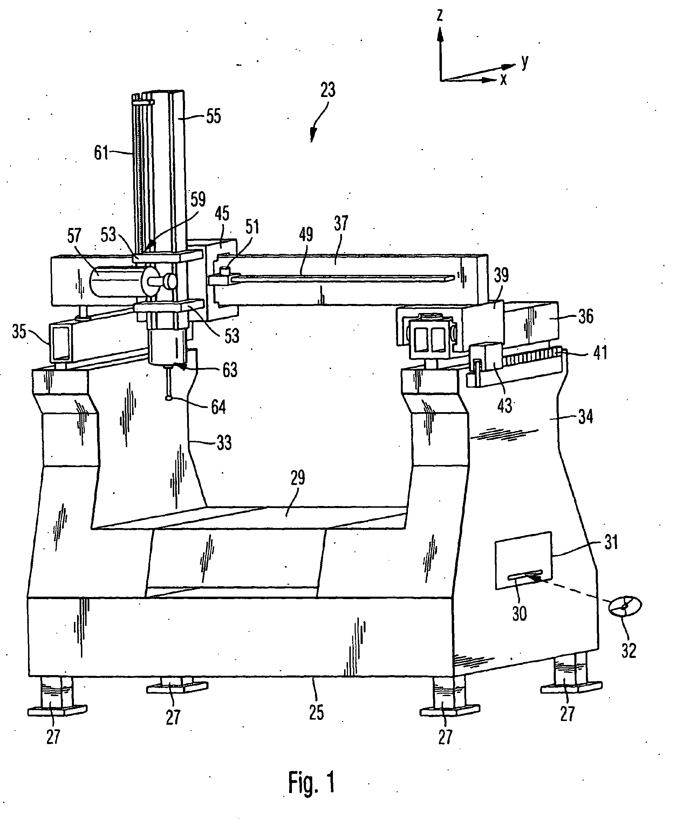

Figur 1 zeigt eine Ausführungsform eines erfindungsgemäßen Koordinatenmeßgeräts am Beispiel eines Koordinatenmeßgeräts 23 in Portalbauweise. Die Elemente des Koordinatenmeßgeräts und des damit durchgeführten Verfahrens werden in der vorliegenden Anmeldung, soweit praktikabel, entsprechend der europäischen Norm EN ISO 10360-1:2000 bezeichnet.

Das Koordinatenmeßgerät umfaßt eine Basis 25 mit Füßen 27. Die Basis 25 umfaßt in ihrer Mitte eine Werkstückhalterung oder Werkstückauflage 29, auf welcher ein zu vermessendes Werkstück anzuordnen ist. Beidseits der Werkstückhalterung 29 erstrecken sich an der Basis 25 Streben 33, 34 nach oben, welche beidseits der Werkstückhalterung 29 angeordnete, in einer horizontalen y-Richtung und parallel zueinander sich erstreckende Längsführungen 35, 36 tragen. Orthogonal zu den Längsführungen 35, 36 erstreckt sich horizontal eine Querführung 37 in x-Richtung, welche an den Längsführungen 35, 36 in y-Richtung linear verschiebbar gelagert ist. Hierzu ist an einem Ende der Querführung 37 ein Führungsprofil 39 vorgesehen, welches die Längsführung 36 von oben U-förmig umgreift und an dieser beispielsweise mittels Luftkissen geführt ist. Mit ihrem anderen Ende ist die Querführung 37 auf der Oberseite der Längsführung 35 abgestützt und auch gegenüber dieser in y-Richtung verschiebbar gelagert. Durch einen motorischen Antrieb, welcher von einer Steuerung 31 kontrolliert wird, kann die Querführung 37 entlang der Längsführung 36 verschoben werden, wobei eine entsprechende Verschiebestellung in y-Richtung durch ein Meßsystem erfaßt wird, welches einen an der Basis festgelegten Maßstab 41 und einen zugehörigen an dem U-Profil 39 festgelegten Sensor 43 zum Ablesen des Maßstabs 41 umfaßt.

An der Querführung 37 ist ein Führungsprofil 45 in x-Richtung linear verschiebbar gelagert, wobei die Verschiebestellung in x-Richtung ebenfalls durch ein Meßsystem erfaßt wird, welches hierzu einen an der Querführung 37 angebrachten Maßstab 49 und einen an dem Führungsprofil 45 festgemachten zugehörigen Sensor 51 aufweist. Von der Steuerung 31 wird ein in Figur 1 nicht dargestellter Antrieb kontrolliert, welcher die Verschiebestellung des Führungsprofils 45 entlang der Querführung 37 ändert.

An dem Führungsprofil 45 sind zwei weitere mit Abstand voneinander angeordnete Führungsprofile 53 vorgesehen, welche eine sich in z-Richtung erstreckende Stange 55 über einen ebenfalls von der Steuerung 31 kontrollierten Motor 57 verschiebbar lagern. Die Verschiebestellung der Stange 55 in z-Richtung wird über einen an der Vertikalführung 53 vorgesehenen Sensor 59 erfaßt, der die Position an einem an der Stange 55 festgelegten Maßstab 61 abliest. An einer an einem untere Ende der Stange 55 vorgesehenen Pinole ist ein Meßkopfsystem 63 gehaltert. Das Meßkopfsystem kann eine Meßkopfverlängerung und/oder ein Meßkopfwechselsystem umfassen, um den eigentlichen Meßkopf an die Pinole zu koppeln. Ein Tastersystem ist wiederum an den Meßkopf gekoppelt, wobei das Tastersystem an den Meßkopf starr gekoppelt sein kann. Es kann auch ein Tasterwechselsystem vorgesehen sein, um an den Meßkopf verschiedene auswechselbare Tastersysteme zu koppeln. Das Tastersystem kann eine Tasterverlängerung umfassen, welche sich in einem Tasterschaft fortsetzt, an dessen Ende ein Tasterelement 64 angebracht ist, welches zum Vermessen der Werkstückoberfläche mit dieser in Kontakt gebracht wird. Das Tasterelement 64 kann beispielsweise eine Rubinkugel sein. Das Tastersystem kann auch mehrere Taster umfassen, welche sich beispielsweise an einer Tasterverlängerung quer zueinander erstrecken, um in verschiedene Richtungen orientierte Oberflächen des Werkstücks anzutasten. In der Pinole und dem Meßkopf oder einem Meßkopfwechselsystem oder einer eingefügten Meßkopfverlängerung kann auch ein Drehschwenksystem vorgesehen sein, um eine Orientierung des Meßkopfes bezüglich der Pinole zu ändern, so daß auch eine Orientierung des Tasters im Raum änderbar ist, um in verschiedene Richtungen orientierte Oberflächen von Werkstücken anzutasten.

Die Steuerung 31 kontrolliert über die Antriebe die Position des Tasterelements 64 relativ zu der Werkstückhalterung 29, sie registriert einen Kontakt zwischen dem Tasterelement und der Oberfläche des Werkstücks, und sie liest die Meßsysteme des Koordinatenmeßgeräts 23 aus, um die Koordinaten der Position des Tasterelements 64 relativ zu der Werkstückhalterung 29 möglichst exakt zu messen. Die Steuerung 31 ist in Figur 1 lediglich schematisch dargestellt. Sie kann als ein Computer ausgeführt sein, welcher Schnittstellen aufweist, um Benutzerbefehle entgegenzunehmen, die Antriebe anzusteuern, die Meßsysteme auszulesen und dergleichen. Der Computer führt die vorgesehenen Operationen gemäß einem Programm aus, welches auf verschiedene Weisen in den Computer geladen werden kann. Schematisch in Figur 1 dargestellt ist eine Compact-Disc ROM 32, welche die Programminformation in computerlesbarer Form trägt und in einen Schacht 30 der Steuerung 31 eingeführt werden kann, um das Programm in den Computer zu laden. Die Programminformation kann allerdings auch in anderer Weise in die Steuerung 31 geladen werden, wie beispielsweise über ein Computernetzwerk.

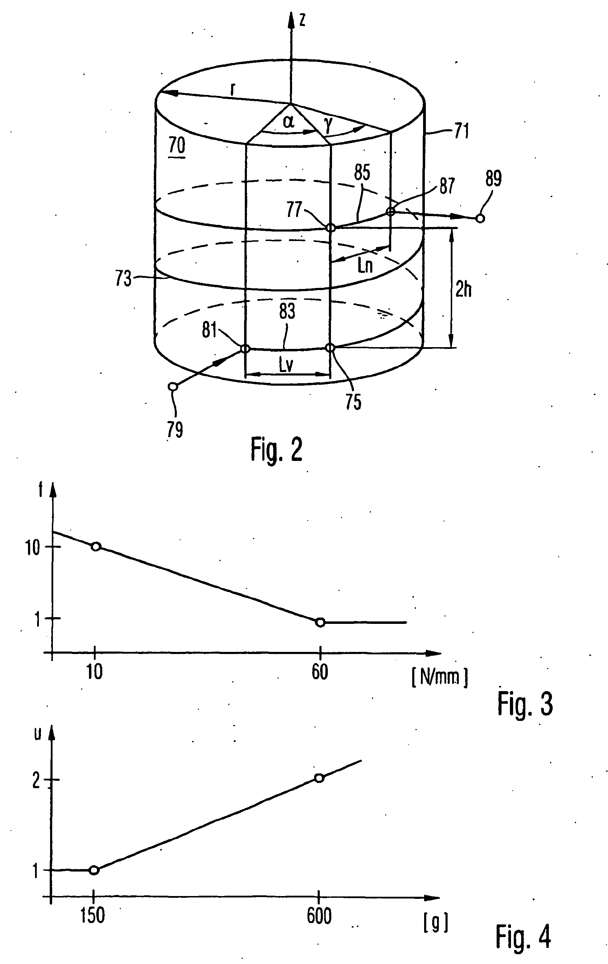

Figur 2 erläutert eine Ausführungsform eines Verfahrens zum Antasten einer Außenmantelfläche 70 eines Zylinders 71, welcher auf der Werkstückhalterung 29 angeordnet ist.

Es sei angenommen, daß die Meßaufgabe darin besteht, die Außenmantelfläche 70 des Zylinders mit Radius r entlang einer Scanning-Bahn 73 anzutasten, welche sich zwischen einem Scanning-Startpunkt 75 und einem Scanning-Endpunkt 77 schraubenförmig in zwei Umläufen mit einer Steigung h um eine Hauptachse z des Zylinders 71 erstreckt.

Hierzu wird das Tasterelement 64 nicht direkt an dem Scanning-Startpunkt 75 mit der Zylinderoberfläche 70 in Kontakt gebracht. Vielmehr wird das Tasterelement ausgehend von einem angenommenen Zwischenpunkt 79 hin zur Oberfläche 70 bewegt, um an einem Vorlaufstartpunkt 81 mit dieser in Kontakt zu kommen. Sobald das Tasterelement an dem Vorlaufstartpunkt 81 mit der Oberfläche 70 in Kontakt gebracht ist, wird das Tasterelement entlang einer Vorlaufbahn 83 hin zu dem Scanning-Startpunkt 75 bewegt. Die Vorlaufbahn 83 hat die Gestalt einer Kreislinie, welche sich über einen Winkel $\alpha$ um die Hauptachse des Zylinders mit konstanter Höhe (z = konstant) an dem Zylinderaußenmantel 70 erstreckt. Während des Durchlaufens der Vorlaufbahn 83, welche an der Zylinderoberfläche 70 eine Länge Lv aufweist, wird das Tasterelement 64 relativ zur Oberfläche 70 auf die Scanning-Geschwindigkeit beschleunigt, wobei das Tasterelement bereits zu Beginn des Durchlaufens der Vorlaufbahn 83 auf die Scanning-Geschwindigkeit gebracht ist und den vergleichsweise größten Teil der Länge Lv bereits mit der Scanning-Geschwindigkeit hin zu dem Scanning-Startpunkt 75 durchläuft. Bis zu dem Zeitpunkt, an dem das Tasterelement den Scanning-Startpunkt 75 durchläuft, sind Einschwingphänomene, welche aufgrund der Beschleunigung und des In-Kontakt-Bringens des Tasterelements mit der Oberfläche entstehen, im wesentlichen abgeklungen.

Nach Durchlaufen des Scanning-Startpunkts 75 wird das Tasterelement entlang der Scannig-Bahn 73 schraubenförmig bis zum Scanning-Endpunkt 77 gescannt, wobei die Scanning-Geschwindigkeit relativ zur Oberfläche beibehalten wird. Während des Scannens werden fortlaufend die Koordinatenwerte der Berührungspunkte des Tasterelements mit der Oberfläche 70 über die Meßsysteme erfaßt und von der Steuerung 31 aufgezeichnet.

Die Steuerung 31 kann hierbei die von den Meßsystemen erfaßten Meßwerte auch hinsichtlich verschiedener Störeinflüsse korrigieren und in gewünschte Koordinatensysteme umrechnen. Störeinflüsse umfassen hierbei beispielsweise vorab ermittelte nicht perfekte orthogonale Ausrichtungen der Längsführungen 35, 36, des Führungsprofils 45 und der Stange 55 zueinander, durch Biegungen von Elementen des Koordinatenmeßgeräts aufgrund der Schwerkraft, Fehler der Meßsysteme beispielsweise aufgrund von Wärmeausdehnung und dergleichen.

Da die Einschwingphänomene aufgrund des Inkontaktbringens des Tasterelements mit der Oberfläche und des Beschleunigens des Tasterelements relativ zur Oberfläche bereits nach Durchlaufen der Vorlaufbahn 83 im wesentlichen abgeklungen waren, ist die Messung während des Scannens entlang der Scanning-Bahn 73 durch solche Einschwingvorgänge im wesentlichen nicht gestört.

Auch der Scanning-Endpunkt 77 wird von dem Tasterelement 64 mit der Scanning-Geschwindigkeit durchlaufen, so daß die Scanning-Bahn 73 über den Scanning-Endpunkt 77 durch eine Nachlaufbahn 85 fortgesetzt ist, welche sich bis hin zu einem Nachlaufendpunkt 87 erstreckt. An dem Nachlaufendpunkt 87 wird der Kontakt zwischen dem Tasterelement 64 und der Oberfläche 70 gelöst, und das Tasterelement wird zu einem von dem Zylinder 71 entfernten Zwischenpunkt 89 bewegt. Die Nachlaufbahn 85 setzt die Schraubenbahn 73 mit konstanter Steigung über einen Umfangswinkel $\gamma$ um die Zylinderachse fort und weist eine Länge Ln auf. Es ist jedoch auch möglich, daß die Nachlaufbahn 85 als Kreislinie ausgebildet ist, welche sich auf der Höhe des Scanning-Endpunkts 77 an der Mantelfläche 70 erstreckt (z = konstant). Ebenso ist es möglich, daß die Vorlaufbahn 83 eine Schraubenbahn ist, welche sich bereits mit der Steigung der Scanning-Bahn 73 an der Mantelfläche 71 erstreckt.

Die Längen $L_v$ und $L_n$ der Vorlaufbahn 83 bzw. Nachlaufbahn 85 und die korrespondierenden Umfangswinkel $\alpha$, $\gamma$ sind bei dem Koordinatenmeßgerät und dem Verfahren nicht konstante feste vorgegebene Werte, sondern sind an die gegebene Meßsituation angepaßt. Ein in Versuchen verwendeter Taster mit einer Masse von 150 Gramm und einer Steifigkeit von 60 N/mm wird im folgenden als Referenztaster bezeichnet. Als Werkstück wurde bei den Versuchen der in Figur 2 gezeigte Zylinder mit einem Radius r von 25 mm verwendet.

Es hat sich herausgestellt, daß Einschwingphänomene während des Vorlaufs nach 0,065 Sekunden und während des Nachlaufs nach 0,016 Sekunden abgeklungen sind. In der nachfolgenden Tabelle 1 sind für verschiedene Scanning-Geschwindigkeiten v die sich hieraus ergebenden Vorlaufwinkel $\alpha$ und Nachlaufwinkel $\gamma$ für den Referenztaster angegeben.

**Tabelle 1**

| v [mm/s] | $\alpha$ | $\gamma$ |
|---|---|---|
| 5 | 0,7° | 0,2° |
| 10 | 1,5° | 0,4° |
| 20 | 3,0° | 0,8° |
| 40 | 6,0° | 1,5° |

Für einen von dem Referenztaster verschiedenen weichen Taster mit einer Masse von ebenfalls 150 Gramm und einer Steifigkeit von 10 N/mm ergab sich in Versuchen eine Einregelzeit während des Vorlaufes von 0,650 Sekunden und während des Nachlaufes von 0,160 Sekunden bei der Antastung des gleichen Zylinders mit dem Radius r von 25 mm. Die nachfolgende Tabelle 2 gibt für verschiedene Scanning-Geschwindigkeiten die sich entsprechend ergebenden Vorlaufwinkel $\alpha$ und Nachlaufwinkel $\gamma$ wieder.

**Tabelle 2**

| v [mm/s] | $\alpha$ | $\gamma$ |
|---|---|---|
| 5 | 7° | 2° |
| 10 | 15° | 4° |
| 20 | 30° | 8° |
| 40 | 60° | 15° |

Sollen neben dem Referenztaster noch weitere Taster mit verschiedenen Steifigkeiten zum Einsatz kommen, so sind auch für diese Taster die entsprechenden Winkel $\alpha$ und $\gamma$ zu bestimmen. Neben der Bestimmung dieser Winkel im Versuch ist es auch möglich, hierzu einen funktionalen Ansatz zunächst beliebiger Art zu verwenden. Als in der Praxis ausreichend hat sich ein linearer Ansatz herausgestellt.

Der Vorlaufwinkel $\alpha$ wird bestimmt nach folgender Formel:

$$\alpha = \alpha_0 \cdot f$$

wobei $\alpha_0$ der Vorlaufwinkel mit dem Referenztaster ist und $f$ ein Korrekturfaktor ist. Ebenso soll für den Nachlaufwinkel $\gamma$ gelten:

$$\gamma = \gamma_0 \cdot f$$

wobei $\gamma_0$ der Nachlaufwinkel für den Referenztaster ist und $f$ der gleiche Korrekturfaktor wie für den Vorlaufwinkel $\alpha$ ist. Für den Korrekturfaktor f wird folgender in Figur 3 gezeigter linearer Ansatz gewählt:

$$f = m \cdot x + b$$

Hierbei repräsentiert $x$ die Tastersteifigkeit, $m$ eine Steigung der Geraden und $b$ einen Offset. Mit den oben in den Tabellen 1 und 2 angegebenen Werten ergibt sich:

$$f = -0{,}18 \frac{mm}{N} \cdot Tastersteifigkeit \left[ \frac{N}{mm} \right] + 11{,}8$$

Ähnlich wie die Tastersteifigkeit hat auch die Tastermasse einen Einfluß auf die Bestimmung der Vorlaufwinkel $\alpha$ und Nachlaufwinkel $\gamma$. Aus Versuchen hat sich ergeben, daß ein Taster mit der Steifigkeit des Referenztasters, welcher allerdings im Unterschied zu diesem eine Masse von 600 Gramm aufweist, eine gegenüber dem Referenztaster verdoppelte Einregelzeit für den Vorlauf und den Nachlauf benötigt. Auch für andere Tastermassen ist die Ermittlung der Winkel $\alpha$ und $\gamma$ im Versuch möglich. Allerdings ist es auch möglich, hier ebenfalls einen zunächst beliebigen funktionalen Ansatz wie folgt zu verwenden:

$$\alpha = \alpha_0 \cdot u \, ,$$

und

$$\gamma = \gamma_0 \cdot u \ ,$$

wobei $\alpha_0$ und $\gamma_0$ wiederum die für den Referenztaster bestimmten Winkel sind und u einen Korrekturfaktor für die Tastermasse bezeichnet. Auch für den Korrekturfaktor u kann ein linearer Ansatz gemäß

$$u = m \cdot x + b$$

eingesetzt werden, welcher in Figur 4 dargestellt ist, und wobei x die Tastermasse, m eine Geradensteigung und b einen Offset bezeichnet.

In dem angegebenen Beispiel ergibt sich für den Korrekturfaktor u für die Tastermasse

$$u = 0{,}0022 \, \frac{1}{g} \cdot Tastermasse \, [g] + 0{,}67$$

Um für beliebige Kombinationen von Tastersteifigkeit und Tastermasse die Winkel $\alpha$ und $\gamma$ zu bestimmen, wird dann folgender kombinierter Ansatz verwendet:

$$\alpha = \alpha_0 \cdot f \cdot u \ ,$$

und

$$\gamma = \gamma_0 \cdot f \cdot u$$

In der nachfolgenden Tabelle 3 sind für verschiedene Tastersteifigkeiten und Tastermassenwerte für die Korrekturfaktoren f und u sowie Vorlaufwinkel $\alpha$ bei zwei verschiedenen Geschwindigkeiten angegeben.

**Tabelle 3**

| Steifigkeit [N/mm] | Masse [g] | f | u | $\alpha$ bei 5 mm/s | $\alpha$ bei 40 mm/s |
|---|---|---|---|---|---|
| 60 | 150 | 1 | 1 | 0,7 | 6,0 |
| 50 | 200 | 2,8 | 1,1 | 2,2 | 18,5 |
| 40 | 300 | 4,6 | 1,3 | 4,2° | 35,9° |
| 30 | 400 | 6,4 | 1,5 | 6,7° | 57,6° |
| 20 | 500 | 8,2 | 1,8 | 10,3° | 88,6° |
| 10 | 600 | 10 | 2 | 14° | 120° |
| 5 | 700 | 10,9 | 2,2 | 16,8° | 143,9° |

Die vorangehend beschriebenen Vorlaufwinkel $\alpha$ und Nachlaufwinkel $\gamma$ ergeben sich für das Beispiel des Antastens eines Zylinders mit einem Radius $r$ von 25 mm. Für Zylinder mit anderen Radien ergeben sich andere Vorlauf- und Nachlaufwinkel.

Allgemein können die jeweiligen Winkel nach der folgenden Formel berechnet werden:

$$s = \frac{360° \cdot v \cdot t}{d \cdot \pi},$$

wobei $s$ den Vorlaufwinkel $\alpha$ oder den Nachlaufwinkel $\gamma$ repräsentiert, $v$ die Scanning-Geschwindigkeit repräsentiert, $d$ den Durchmessers des Zylinders repräsentiert und $t$ die Zeitdauer in Sekunden des Einschwingvorgangs während des Vorlaufs bzw. des Nachlaufs repräsentiert.

Beim Antasten von Werkstücken mit Geometrien, welche von der Zylindergeometrie abweichen, können Längen von Vorlaufbahnen und Nachlaufbahnen in entsprechender Weise aus den Einregelzeiten während des Vorlaufs und des Nachlaufs ermittelt werden.

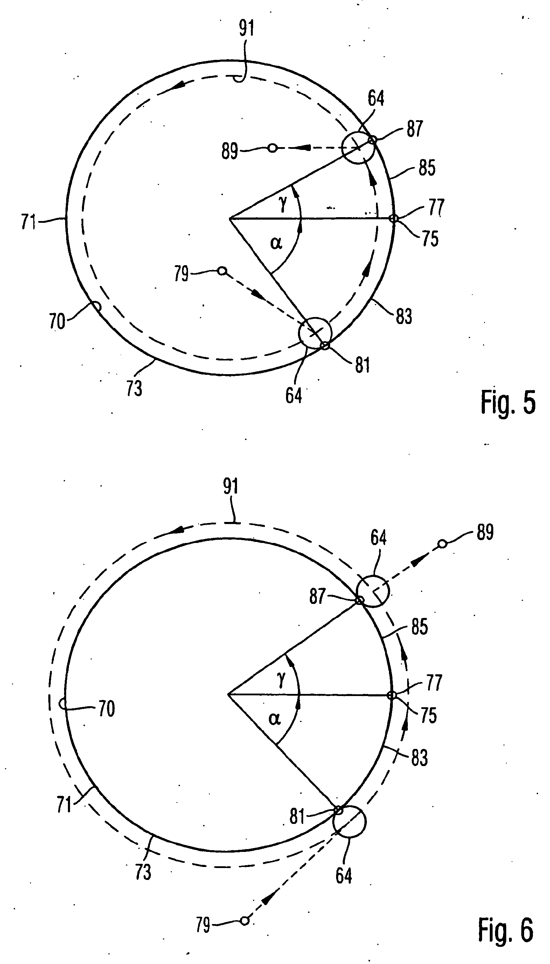

Figur 5 erläutert ein Verfahren zum Scannen eines Hohlzylinders 71 auf einer geschlossenen Kreisbahn. Eine Innenzylinderfläche 70 kann beispielsweise als Bohrung in einem Werkstück definiert sein. Das Tasterelement 64 wird zunächst an einen Zwischenpunkt 79 im Inneren der Bohrung bewegt und sodann an einem Vorlaufstartpunkt 81 in Kontakt mit der Oberfläche 70 gebracht. Von da wird eine über einen Umfangswinkel $\alpha$ um eine zentrale Achse der Bohrung sich erstreckende Vorlaufbahn 83 durchlaufen, wobei das Tasterelement 64 relativ zur Oberfläche 70 auch auf die Scanning-Geschwindigkeit v beschleunigt wird. Es wird sodann der Scanning-Startpunkt 75 mit der Scanning-Geschwindigkeit durchlaufen, und die Scanning-Bahn 73 erstreckt sich entlang der Innenoberfläche der Bohrung 71 über den vollen Umfang derselben bis zu einem Scanning-Endpunkt 77, welcher mit dem Scanning-Startpunkt 75 zusammenfällt. Das Tasterelement wird dann weitergeführt über eine Nachlaufbahn 85 bis zu einem Nachlaufendpunkt 87, von wo der Kontakt zwischen dem Tasterelement 64 und der Innenoberfläche aufgehoben wird und das Tasterelement zu einem weiteren Zwischenpunkt 89 bewegt wird. In Figur 5 repräsentiert die gestrichelte Linie 91 die Bahn des Zentrums des kugelförmigen Tasterelements.

Figur 6 ist eine Veranschaulichung des Scannens einer geschlossenen Kreislinie an einer Außenmantelfläche 70, welche beispielsweise durch einen Zylinderschaft 71 definiert ist. Die Bezeichnung der in der Figur 6 dargestellten Elemente folgt analog zu den Elementen der Figur 5 mit den gleichen Bezugszeichen.

Bei der Ausführungsform der Figur 6 ist der Zwischenpunkt 79 derart gewählt, daß der Taster 64 bei der Bewegung von dem Zwischenpunkt 79 bis zu dem Vorlaufstartpunkt 81 sich tangential an die Oberfläche 70 heranbewegt, so daß der Kontakt zwischen dem Tasterelement 64 und der Oberfläche 70 auf eine sanfte Weise entsteht und die Bewegung des Tasters kontinuierlich in die Bewegung entlang der Vorlaufbahn übergeht.

In den vorangehend erläuterten Ausführungsformen sind die anzutastenden Oberflächen Zylinderoberflächen. Es ist jedoch auch möglich, Oberflächen anderer Geometrie anzutasten, wie beispielsweise Kugelflächen bzw. Teile hiervon, Ebenen oder beliebig geformte Flächen usw. Die Scanning-Bahn kann als Scanning-Soll-Linie vorgegeben sein und beispielsweise aus Konstruktionsdaten des Werkstücks abgeleitet sein. Die Scanning-Bahn kann eine vorgegebene Scanning-Bahn sein, welche mit einer Scanning-Methode angetastet wird, bei der die Bewegung des Meßkopfsystems zwischen zwei definierten Endpunkten auf einer Scanning-Soll-Linie erfolgt. Die Scanning-Bahn kann auch eine nicht vorgegebene Scanning-Bahn sein, welche mit einer Scanning-Methode angetastet wird, bei der die Bewegung des Meßkopfsystems zwischen zwei definierten Begrenzungen durch Rückkopplung vom Meßkopfsystem gesteuert wird.

Zusammenfassend sieht die Erfindung ein Verfahren und ein Koordinatenmeßgerät zum scannenden Antasten eines zu vermessenden Werkstücks mit einem Koordinatenmeßgerät vor, wobei ein Tasterelement vor dem Scannen entlang einer Scanning-Bahn entlang einer Vorlaufbahn bewegt oder/und nach der Scanning-Bahn entlang einer Nachlaufbahn bewegt. Eine Länge der Vorlaufbahn bzw. Nachlaufbahn wird in Abhängigkeit von Parametern einer konkreten Meßaufgabe gewählt, insbesondere in Abhängigkeit von einer vorbestimmten Scanning-Geschwindigkeit, einer Steifigkeit des Tasters und/oder einer Masse des Tasters.

**Patentansprüche**

1. Verfahren zum Antasten einer Oberfläche (70) eines zu vermessenden Werkstücks (71) mit einem Koordinatenmeßgerät (23), wobei das Verfahren umfaßt:

   In-Kontakt-Bringen eines Tasterelements (64) eines Tasters des Koordinatenmeßgeräts mit der Oberfläche (70) des Werkstücks (71) an einem Vorlaufstartpunkt (81) auf der Oberfläche (70);
   Bewegen des Tasterelements (64) entlang einer zwischen dem Vorlaufstartpunkt (81) und einem Scanning-Startpunkt (75) sich erstreckenden Vorlaufbahn (83) auf der Oberfläche (70) unter Beibehaltung des Kontakts zwischen dem Tasterelement (64) und der Oberfläche (70), wobei das Tasterelement (64) an dem Scanning-Startpunkt (75) relativ zu der Oberfläche (70) im wesentlichen eine vorbestimmte Scanning-Geschwindigkeit aufweist;

Scannen der Oberfläche (70) mit dem Tasterelement (64) entlang einer zwischen dem Scanning-Startpunkt (75) und einem Scanning-Endpunkt (77) sich erstreckenden Scanning-Bahn (73) mit der Scanning-Geschwindigkeit;

wobei eine Länge ($L_v$) der Vorlaufbahn (83) in Abhängigkeit von der vorbestimmten Scanning-Geschwindigkeit oder/und einer Steifigkeit des Tasters oder/und einer Masse des Tasters bestimmt wird.

2. Verfahren zum Antasten einer Oberfläche (70) eines zu vermessenden Werkstücks (71) mit einem Koordinatenmeßgerät (23), wobei das Verfahren umfaßt:

In-Kontakt-Bringen eines Tasterelements (64) eines Tasters des Koordinatenmeßgeräts mit der Oberfläche (70) des Werkstücks (71) an einem Scanning-Startpunkt (75) ;

Scannen der Oberfläche (70) mit dem Tasterelement (64) entlang einer zwischen dem Scanning-Startpunkt (75) und einem Scanning-Endpunkt (77) sich erstreckenden Scanning-Bahn (73) mit einer vorbestimmten Scanning-Geschwindigkeit;

Bewegen des Tasterelements (64) entlang einer zwischen dem Scanning-Endpunkt (77) und einem Nachlaufendpunkt (87) sich erstreckenden Nachlaufbahn (85) unter Beibehaltung des Kontakts zwischen dem Tasterelement (64) und der Oberfläche (70);

wobei eine Länge ($L_n$) der Nachlaufbahn (85) in Abhängigkeit von der vorbestimmten Scanning-Geschwindigkeit oder/und einer Steifigkeit des Tasters oder/und einer Masse des Tasters bestimmt wird.

3. Verfahren gemäß Anspruch 1, ferner umfassend:

Bewegen des Tasterelements (64) entlang einer zwischen dem Scanning-Endpunkt (77) und einem Nachlaufendpunkt (87) sich erstreckenden Nachlaufbahn (85) unter Beibehaltung des Kontakts zwischen dem Tasterelement (64) und der Oberfläche (70) ;

wobei eine Länge ($L_v$) der Vorlaufbahn (83) oder/und eine Länge ($L_n$) der Nachlaufbahn (85) in Abhängigkeit von der vorbestimmten Scanning-Geschwindigkeit oder/und einer Steifigkeit des Tasters oder/und einer Masse des Tasters bestimmt wird.

4. Verfahren nach einem der Ansprüche 1 bis 3, wobei ein erstes Werkstück bei einem ersten Scannen mit einem ersten Tasterelement gescannt wird und das erste Werkstück oder ein von dem ersten Werkstück verschiedenes zweites Werkstück bei einem zweiten Scannen mit einem von dem ersten Tasterelement verschiedenen zweiten Tasterelement gescannt wird, wobei die Steifigkeit des Tasters bezüglich dem ersten Tasterelement größer ist als die Steifigkeit des Tasters bezüglich dem zweiten Tasterelement, und wobei die Länge der Vorlaufbahn oder/und die Länge der Nachlaufbahn vor bzw. nach dem ersten Scannen kürzer ist als die Länge der Vorlaufbahn oder/und die Länge der Nachlaufbahn vor bzw. nach dem zweiten Scannen.

5. Verfahren nach Anspruch 4, wobei ein relativer Unterschied zwischen der Steifigkeit des Tasters bezüglich dem ersten Tasterelement und der Steifigkeit des Tasters bezüglich dem zweiten Tasterelement größer ist als 0,1 und wobei ein relativer Unterschied zwischen der Länge der Vorlaufbahn vor dem ersten Scannen und der Länge der Vorlaufbahn vor dem zweiten Scannen größer als 0,1 ist oder/und ein relativer Unterschied zwischen der Länge der Nachlaufbahn nach dem ersten Scannen und der Länge der Nachlaufbahn nach dem zweiten Scannen größer als 0,1 ist.

6. Verfahren nach einem der Ansprüche 1 bis 5, wobei ein erstes Werkstück bei einem ersten Scannen mit einem ersten Tasterelement gescannt wird und das erste Werkstück oder ein von dem ersten Werkstück verschiedenes zweites Werkstück bei einem zweiten Scannen mit einem von dem ersten Tasterelement verschiedenen zweiten Tasterelement gescannt wird, wobei die Masse des Tasters des ersten Tasterelements größer ist als die Masse des Tasters des zweiten Tasterelements, und wobei die Länge der Vorlaufbahn oder/und die Länge der Nachlaufbahn vor bzw. nach dem ersten Scannen größer ist als die Länge der Vorlaufbahn oder/und die Länge der Nachlaufbahn vor bzw. nach dem zweiten Scannen.

**7.** Verfahren nach Anspruch 6, wobei ein relativer Unterschied zwischen der Masse des Tasters des ersten Tasterelements und der Masse des Tasters des zweiten Tasterelements größer ist als 0,1 und wobei ein relativer Unterschied zwischen der Länge der Vorlaufbahn vor dem ersten Scannen und der Länge der Vorlaufbahn vor dem zweiten Scannen größer als 0,1 ist oder/und ein relativer Unterschied zwischen der Länge der Nachlaufbahn nach dem ersten Scannen und der Länge der Nachlaufbahn nach dem zweiten Scannen größer als 0,1 ist.

**8.** Verfahren nach einem der Ansprüche 1 bis 7, wobei ein erstes Werkstück bei einem ersten Scannen mit einer ersten Scanning-Geschwindigkeit gescannt wird und das erste Werkstück oder ein von dem ersten Werkstück verschiedenes zweites Werkstück bei einem zweiten Scannen mit einer von der ersten Scanning-Geschwindigkeit verschiedenen zweiten Scanning-Geschwindigkeit gescannt wird, wobei die erste Scanning-Geschwindigkeit größer ist als die zweite Scanning-Geschwindigkeit, und wobei die Länge der Vorlaufbahn oder/und die Länge der Nachlaufbahn vor bzw. nach dem ersten Scannen größer ist als die Länge der Vorlaufbahn oder/und die Länge der Nachlaufbahn vor bzw. nach dem zweiten Scannen.

**9.** Verfahren nach Anspruch 8, wobei ein relativer Unterschied zwischen der ersten Scanning-Geschwindigkeit und der zweiten Scanning-Geschwindigkeit größer ist als 0,1 und wobei ein relativer Unterschied zwischen der Länge der Vorlaufbahn vor dem ersten Scannen und der Länge der Vorlaufbahn vor dem zweiten Scannen größer als 0,1 ist oder/und ein relativer Unterschied zwischen der Länge der Nachlaufbahn nach dem ersten Scannen und der Länge der Nachlaufbahn nach dem zweiten Scannen größer als 0,1 ist.

**10.** Verfahren nach einem der Ansprüche 3 bis 9, wobei die Länge (Lv) der Vorlaufbahn (83) größer ist als die Länge (Ln) der Nachlaufbahn (85).

**11.** Verfahren nach einem der Ansprüche 1, oder 3 bis 10, wobei das Bewegen des Tasterelements (64) entlang der Vorlaufbahn (83) ein Erhöhen der Geschwindigkeit des Tasterelements (64) relativ zu der Oberfläche (70) auf im wesentlichen die vorbestimmte Scanning-Geschwindigkeit umfaßt.

**12.** Verfahren nach einem der Ansprüche 2 bis 9, wobei das Bewegen des Tasterelements (64) entlang der Nachlaufbahn (85) ein Reduzieren der Geschwindigkeit des Tasterelements (64) relativ zu der Oberfläche (70) auf im wesentlichen Null umfaßt.

**13.** Verfahren nach einem der Ansprüche 1 bis 12, wobei die Scanning Geschwindigkeit währen des Scannens entlang der Scanning-Bahn (73) im wesentlichen konstant ist.

**14.** Verfahren nach einem der Ansprüche 1 bis 13, wobei die Oberfläche eine Mantelfläche (70) eines Zylinders (71) ist.

**15.** Verfahren nach Anspruch 14, wobei die Scanning-Bahn (73) die Mantelfläche (70) in Umfangsrichtung des Zylinders (71) wenigstens ein Mal umgreift.

**16.** Verfahren nach Anspruch 15, wobei eine Höhe z der Scanning-Bahn (73) in Richtung einer Achse des Zylinders (71) kontinuierlich zunimmt.

**17.** Verfahren nach Anspruch 15, wobei die Scanning-Bahn (73) eine die Mantelfläche (70) in Umfangsrichtung des Zylinders (71) ein Mal umgreifende geschlossene Bahn ist.

**18.** Koordinatenmeßgerät zum Antasten einer Oberfläche (70) eines zu vermessenden Werkstücks (71), wobei das Koordinatenmeßgerät (23) umfaßt:

   eine Werkstückhalterung (29) zur Lagerung des zu vermessenden Werkstücks (71);
   ein Meßsystem (63) mit einem Taster zum Antasten der Oberfläche (70) des Werkstücks (71);
   mehrere relativ zueinander verlagerbare Komponenten (36,37,55), von denen eine (36) mit der Werkstückhalterung (29) fest verbunden ist und eine andere (55) das Meßsystem (63) trägt, so daß das Meßsystem (73) relativ zu der Werkstückhalterung (29) räumlich verlagerbar ist;
   wenigstens einen Antrieb (57) zum Verlagern der mehreren Komponenten (36,37,55) relativ zueinander;
   eine Steuerung (31) zum Ansteuern des wenigstens einen Antriebs (57), wobei die Steuerung (31) dazu konfiguriert ist, das Verfahren nach einem der Ansprüche 1 bis 17 auszuführen.

**19.** Computerlesbarer Träger, welcher Informationen enthält, welche ein Steuerungsprogramm repräsentieren, das dazu ausgebildet ist, eine Steuerung eines Koordinatenmeßgeräts zu veranlassen, das Verfahren nach einem der Ansprüche 1 bis 17 auszuführen.

**Claims**

1.  A method for probing a surface (70) of a workpiece (71) to be measured using a coordinate measuring device (23), said method comprising:

    bringing into contact a stylus tip (64) of a stylus of the coordinate measuring device with the surface (70) of the workpiece (71) at an initialization path starting point (81) on the surface (70);
    moving the stylus tip (64) along an initialization path (83) extending between the initialization path starting point (81) and a scanning starting point (75) on the surface (70), while maintaining the contact between the stylus tip (64) and the surface (70), wherein the stylus tip (64) has, at the scanning starting point (75), substantially a pre-determined scanning speed relative to the surface (70);
    scanning the surface (70) with the stylus tip (64) at the scanning speed along a scanning path (73) extending between the scanning starting point (75) and a scanning end point (77);

    wherein a length ($L_v$) of the initialization path (83) is determined in dependence of the pre-determined scanning speed or/and a stiffness of the stylus or/and a mass of the stylus.

2.  A method for probing a surface (70) of a workpiece (71) to be measured using a coordinate measuring device (23), said method comprising:

    bringing into contact a stylus tip (64) of a stylus of the coordinate measuring device with the surface (70) of the workpiece (71) at an initialization path starting point (75);
    scanning the surface (70) with the stylus tip (64) at a predetermined scanning speed along a scanning path (73) extending between the scanning starting point (75) and a scanning end point (77);
    moving the stylus tip (64) along a finalization path (85) extending between the scanning end point (77) and a finalization path end point (87), while maintaining the contact between the stylus tip (64) and the surface (70);

    wherein a length ($L_n$) of the finalization path (83) is determined in dependence of the pre-determined scanning speed or/and a stiffness of the stylus or/and a mass of the stylus.

3.  The method according to claim 1, further comprising
    moving the stylus tip (64) along a finalization path (85) extending between the scanning end point (77) and a finalization path end point (87), while maintaining the contact between the stylus tip (64) and the surface (70);
    wherein a length ($L_v$) of the initialization path (83) or/and a length ($L_n$) of the finalization path (85) is determined in dependence of the pre-determined scanning speed or/and a stiffness of the stylus or/and a mass of the stylus.

4.  The method according to one of claims 1 to 3, wherein a first workpiece is scanned in a first scanning using a first stylus tip and the first workpiece or a second workpiece different from the first workpiece is scanned in a second scanning using a second stylus tip different from the first stylus tip, wherein the stiffness of the stylus in respect of the first stylus tip is greater than the stiffness of the stylus in respect of the second stylus tip, and wherein the length of the initialization path or/and the length of the finalization path before, respectively after, the first scanning is shorter than the length of the initialization path or/and the length of the finalization path before, respectively after, the second scanning.

5.  The method according to claim 4, wherein a relative difference between the stiffness of the stylus in respect of the first stylus tip and the stiffness of the stylus in respect of the second stylus tip is greater than 0.1 and wherein a relative difference between the length of the initialization path before the first scanning and the length of the initialization path before the second scanning is greater than 0.1 or/and a relative difference between the length of the finalization path after the first scanning and the length of the finalization path after the second scanning is greater than 0.1.

6.  The method according to one of claims 1 to 5, wherein a first workpiece is scanned in a first scanning using a first stylus tip and the first workpiece or a second workpiece different from the first workpiece is scanned in a second scanning using a second stylus tip different from the first stylus tip, wherein the mass of the stylus of the first stylus tip is greater than the mass of the stylus of the second stylus tip, and wherein the length of the initialization path or/and the length of the finalization path before, respectively after, the first scanning is greater than the length of the initialization path or/and the length of the finalization path before, respectively after, the second scanning.

7. The method according to claim 6, wherein a relative difference between the mass of the first stylus of the first stylus tip and the mass of the stylus of the second stylus tip is greater than 0.1, and wherein a relative difference between the length of the initialization path before the first scanning and the length of the initialization path before the second scanning is greater than 0.1 or/and a relative difference between the length of the finalization path after the first scanning and the length of the finalization path after the second scanning is greater than 0.1.

8. The method according to one of claims 1 to 7, wherein a first workpiece is scanned in a first scanning with a first scanning speed and the first workpiece or a second workpiece different from the first workpiece is scanned in a second scanning with a second scanning speed different from the first scanning speed, wherein the first scanning speed is greater than the second scanning speed, and wherein the length of the initialization path or/and the length of the finalization path before, respectively after, the first scanning is greater than the length of the initialization path or/and the length of the finalization path before, respectively after, the second scanning.

9. The method according to claim 8, wherein a relative difference between the first scanning speed and the second scanning speed is greater than 0.1 and wherein a relative difference between the length of the initialization path before the first scanning and the length of the initialization path before the second scanning is greater than 0.1 or/and a relative difference between the length of the finalization path after the first scanning and the length of the finalization path after the second scanning is greater than 0.1.

10. The method according to one of claims 3 to 9, wherein the length (Lv) of the initialization path (83) is greater than the length (Ln) of the finalization path (85).

11. The method according to one of claims 1 or 3 to 10, wherein the moving the stylus tip (64) along the initialization path (83) comprises increasing the speed of the stylus tip (64) relative to the surface (70) to substantially the predetermined scanning speed.

12. The method according to one of claims 2 to 9, wherein the moving the stylus tip (64) along the finalization path (85) comprises reducing the speed of the stylus tip (64) relative to the surface (70) to substantially Zero.

13. The method according to one of claims 1 to 12, wherein the scanning speed is substantially constant during the scanning along the scanning path (73).

14. The method according to one of claims 1 to 13, wherein the surface is a lateral surface (70) of a cylinder (71).

15. The method according to claim 14, wherein the scanning path (73) surrounds the lateral surface (70) in a direction of a perimeter of the cylinder (71) at least once.

16. The method according to claim 15, wherein a height z of the scanning path (73) continuously increases in a direction of an axis of the cylinder (71).

17. The method according to claim 15, wherein the scanning path (73) is a closed path surrounding the lateral surface (70) in a direction of a perimeter of the cylinder (71) once.

18. A coordinate measuring device for probing a surface (70) of a workpiece (71) to be measured, wherein the coordinate measuring device (23) comprises:

a workpiece holder (29) for holding the workpiece (71) to be measured;
a measuring system (63) with a stylus for probing the surface (70) of the workpiece (71);
plural components (36, 37, 55) displaceable relative to each other, one (36) of which is fixedly connected to the workpiece holder (29) and another one (55) carries the measuring system (63) such that the measuring system (73) is spatially displaceable relative to the workpiece holder (29);
at least one drive (57) for displacing the plural components (36, 37, 55) relative to each other;
a controller (31) for controlling the at least one drive (57), wherein the controller (31) is configured to perform the method according to one of claims 1 to 17.

**19.** Computer readable carrier, comprising information representing a controlling program that is adapted to cause a controller of a coordinate measuring device to perform the method according to one of claims 1 to 17.

**Revendications**

**1.** Procédé de palpage d'une surface (70) d'une pièce (71) à mesurer avec un appareil de mesure de coordonnées (23), dans lequel le procédé comprend :

la mise en contact d'un élément de palpeur (64) d'un palpeur de l'appareil de mesure de coordonnées avec la surface (70) de la pièce (71) au niveau d'un point de départ d'avance (81) sur la surface (70) ;
le déplacement de l'élément de palpeur (64) le long d'une trajectoire d'avance (83) qui s'étend entre le point de départ d'avance (81) et un point de départ de balayage (75) sur la surface (70) en conservant le contact entre l'élément de palpeur (64) et la surface (70), l'élément de palpeur (64) présentant essentiellement une vitesse de balayage prédéterminée par rapport à la surface (70) au niveau du point de départ de balayage (75) ;
le balayage par scanner de la surface (70) avec l'élément de palpeur (64) le long d'une trajectoire de balayage (73), qui s'étend entre le point de départ de balayage (75) et un point de fin de balayage (77), avec la vitesse de balayage ;

dans lequel une longueur ($L_v$) de la trajectoire d'avance (83) est déterminée en fonction de la vitesse de balayage prédéterminée et/ou d'une rigidité du palpeur et/ou d'une masse du palpeur.

**2.** Procédé de palpage d'une surface (70) d'une pièce (71) à mesurer avec un système de mesure de coordonnées (23), dans lequel le procédé comprend :

la mise en contact d'un élément de palpeur (64) d'un palpeur de l'appareil de mesure de coordonnées avec la surface (70) de la pièce (71) au niveau d'un point de départ de balayage (75) ;
le balayage par scanner de la surface (70) avec un élément de palpeur (64) le long d'une trajectoire de balayage (73) qui s'étend entre le point de départ de balayage (75) et un point de fin de balayage (77) avec une vitesse de balayage prédéterminée ;
le déplacement de l'élément de palpeur (64) le long d'une trajectoire de poursuite (85) qui s'étend entre le point de fin de balayage (77) et un point de fin de poursuite (87) en conservant le contact entre l'élément de palpeur (64) et la surface (70) ;

dans lequel une longueur ($L_n$) de la trajectoire de poursuite (85) est déterminée en fonction de la vitesse de balayage prédéterminée et/ou d'une rigidité du palpeur et/ou d'une masse du palpeur.

**3.** Procédé selon la revendication 1, comprenant en outre :

le déplacement de l'élément de palpeur (64) le long d'une trajectoire de poursuite (85) qui s'étend entre un point de fin de balayage (77) et un point de fin de poursuite (87) en conservant le contact entre l'élément de palpeur (64) et la surface (70) ;

dans lequel une longueur ($L_v$) de la trajectoire d'avance (83) et/ou une longueur ($L_n$) de la trajectoire de poursuite (85) est/sont déterminée(s) en fonction de la vitesse de balayage prédéterminée et/ou d'une rigidité du palpeur et/ou d'une masse du palpeur.

**4.** Procédé selon l'une des revendications 1 à 3, dans lequel une première pièce est balayée par scanner lors d'un premier balayage par scanner avec un premier élément de palpeur et la première pièce ou une seconde pièce différente de la première pièce est balayée par scanner lors d'un second balayage par scanner avec un second élément de palpeur différent du premier élément de palpeur, la rigidité du palpeur pour ce qui est du premier élément de palpeur étant supérieure à la rigidité du palpeur pour ce qui est du second élément de palpeur, et la longueur de la trajectoire d'avance et/ou la longueur de la trajectoire de poursuite avant ou après le premier balayage par scanner étant plus courte(s) que la longueur de la trajectoire d'avance et/ou la longueur de la trajectoire de poursuite avant ou après le second balayage par scanner.

**5.** Procédé selon la revendication 4, dans lequel une différence relative entre la rigidité du palpeur pour ce qui est du premier élément de palpeur et la rigidité du palpeur pour ce qui est du second élément de palpeur est supérieure à 0,1, et dans lequel une différence relative entre la longueur de la trajectoire d'avance avant le premier balayage par scanner et la longueur de la trajectoire d'avance avant le second balayage par scanner est supérieure à 0,1 et/ou une différence relative entre la longueur de la trajectoire de poursuite après le premier balayage par scanner et la longueur de la trajectoire de poursuite après le second balayage par scanner est supérieure à 0,1.

6. Procédé selon l'une des revendications 1 à 5, dans lequel une première pièce, lors d'un premier balayage par scanner, est balayée par scanner avec un premier élément de palpeur, et la première pièce ou une seconde pièce différente de la première pièce, lors d'un second balayage par scanner, est balayée par scanner avec un second élément de palpeur différent du premier élément de palpeur, la masse du palpeur du premier élément de palpeur étant supérieure à la masse du palpeur du second élément de palpeur, et la longueur de la trajectoire d'avance et/ou la longueur de la trajectoire de poursuite avant ou après le premier balayage par scanner étant plus grande (s) que la longueur de la trajectoire d'avance et/ou la longueur de la trajectoire de poursuite avant ou après le second balayage par scanner.

7. Procédé selon la revendication 6, dans lequel une différence relative entre la masse du palpeur du premier élément de palpeur et la masse du palpeur du second élément de palpeur est supérieure à 0,1, et dans lequel une différence relative entre la longueur de la trajectoire d'avance avant le premier balayage par scanner et la longueur de la trajectoire d'avance avant le second balayage par scanner est supérieure à 0,1 et/ou une différence relative entre la longueur de la trajectoire de poursuite après le premier balayage par scanner et la longueur de la trajectoire de poursuite après le second balayage par scanner est supérieure à 0,1.

8. Procédé selon l'une des revendications 1 à 7, dans lequel une première pièce, lors d'un premier balayage par scanner, est balayée par scanner avec une première vitesse de balayage et la première pièce ou une seconde pièce différente de la première pièce, lors d'un second balayage par scanner, est balayée par scanner avec une seconde vitesse de balayage différente de la première vitesse de balayage, la première vitesse de balayage étant supérieure à la seconde vitesse de balayage, et la longueur de la trajectoire d'avance et/ou la longueur de la trajectoire de poursuite avant ou après le premier balayage par scanner étant supérieure(s) à la longueur de la trajectoire d'avance et/ou à la longueur de la trajectoire de poursuite avant ou après le second balayage par scanner.

9. Procédé selon la revendication 8, dans lequel une différence relative entre la première vitesse de balayage et la seconde vitesse de balayage est supérieure à 0,1 et dans lequel une différence relative entre la longueur de la trajectoire d'avance avant le premier balayage par scanner et la longueur de la trajectoire d'avance avant le second balayage par scanner est supérieure à 0,1 et/ou une différence relative entre la longueur de la trajectoire de poursuite après le premier balayage par scanner et la longueur de la trajectoire de poursuite après le second balayage par scanner est supérieure à 0,1.

10. Procédé selon l'une des revendications 3 à 9, dans lequel la longueur ($L_v$) de la trajectoire d'avance (83) est supérieure à la longueur ($L_n$) de la trajectoire de poursuite (85).

11. Procédé selon l'une des revendications 1 ou 3 à 10, dans lequel le déplacement de l'élément de palpeur (64) le long de la trajectoire d'avance (83) comprend une augmentation de la vitesse de l'élément de palpeur (64) par rapport à la surface (70) essentiellement jusqu'à la vitesse de balayage prédéterminée.

12. Procédé selon l'une des revendications 2 à 9, dans lequel le déplacement de l'élément de palpeur (64) le long de la trajectoire de poursuite (85) comprend une réduction de la vitesse de l'élément de palpeur (64) par rapport à la surface (70) à essentiellement zéro.

13. Procédé selon l'une des revendications 1 à 12, dans lequel la vitesse de balayage pendant le balayage par scanner le long de la trajectoire de balayage (73) est essentiellement constante.

14. Procédé selon l'une des revendications 1 à 13, dans lequel la surface est une surface d'enveloppe (70) d'un cylindre (71).

15. Procédé selon la revendication 14, dans lequel la trajectoire de balayage (73) enveloppe au moins une fois la surface d'enveloppe (70) dans la direction périphérique du cylindre (71).

16. Procédé selon la revendication 15, dans lequel une hauteur z de la trajectoire de balayage (73) augmente en continu dans la direction d'un axe du cylindre (71).

**17.** Procédé selon la revendication 15, dans lequel la trajectoire de balayage (73) est une trajectoire fermée entourant une fois la surface d'enveloppe (70) dans la direction périphérique du cylindre (71).

**18.** Appareil de mesure de coordonnées destiné à palper une surface (70) d'une pièce à mesurer (71), dans lequel l'appareil de mesure de coordonnées (23) comprend :

un support de pièce (29) destiné à loger la pièce (71) à mesurer ;
un système de mesure (63) avec un palpeur permettant de palper la surface (70) de la pièce (71) ;
plusieurs composants (36, 37, 55) déplaçables les uns par rapport aux autres, parmi lesquels un composant (36) est relié de façon fixe au support de pièce (29) et un autre (55) porte le système de mesure (63), de façon à ce que le système de mesure (73) puisse être mobile dans l'espace par rapport au support de pièce (29) ;
au moins un entraînement (57) pour déplacer les différents composants (36, 37, 55) les uns par rapport aux autres ;
une commande (31) destinée à commander l'entraînement (57), au moins au nombre de un, où la commande (31) est pour ce faire configurée pour exécuter le procédé selon l'une des revendications 1 à 17.

**19.** Support lisible par ordinateur qui contient des informations qui représentent un programme de commande qui est conçu pour provoquer une commande d'un appareil de mesure de coordonnées permettant d'exécuter le procédé selon l'une des revendications 1 à 17.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5189806 A